# EUROPEAN PATENT SPECIFICATION

(11) **EP 2 232 464 B1**
(45) Date of publication and mention of the grant of the patent: **08.06.2016**
(21) Application number: 09702640.5
(22) Date of filing: 13.01.2009
(51) Int. Cl.: G09B 9/04, G09B 9/042

(54) **GEAR SHIFTING MECHANISM**
GANGSCHALTUNGSMECHANISMUS
CHANGEMENT DE VITESSES

(30) Priority: 14.01.2008 IN CH01262008
(43) Date of publication of application: 29.09.2010
(73) Proprietor: Zen Technologies Limited, Hyderabad 500 018 (IN)
(72) Inventor: ATLURI, Kishore Dutt, Hyderabad 500 018 (IN); ANGA, Samson Jayaprakash, Hyderabad 500 018 (IN)
(74) Representative: Freischem & Partner Patentanwälte mbB
(86) International application number: PCT/IN2009/000041
(87) International publication number: WO 2009/090672

(56) References cited:
- EP-A2- 0 877 312
- FR-A1- 2 826 451
- GB-A- 2 024 742
- US-A- 5 749 268

## Description

### TECHNICAL FIELD:

The subject matter described herein in general relates to the field of gear shifting and more particularly relates to the field of simulation of gear shifting in a vehicle.

### BACKGROUND:

A conventional vehicle simulator has various control devices such as acceleration pedal, brake pedal, clutch pedal, steering wheel, and gear change lever. Some high end vehicle simulators employ a digital computer to provide a road vehicle driving simulation while other vehicle simulators employ non-digital techniques which emulates actual feel of devices being used while driving a simulator vehicle. Some vehicle simulators also employ actual parts like a gear box assembly to achieve an actual feel of forces felt by the operator while manipulating the gearshift of a vehicle. A compelling reason to use an actual gear box assembly in vehicle simulators is often attributed to the complexity and difficulty involved while designing a gear box simulator which would perfectly emulate actual force felt by operator while manipulating gearshift of a simulator vehicle. However, employing an actual gear box in vehicle simulators brings along inherent disadvantages like a bigger size and hence occupies more space; heavier in weight and hence difficult to mount, dismount and transport. Further, an actual gear box needs to be changed according to the type of vehicle used and hence an actual gear box does not serve optimum purpose for training of all kinds of vehicles. Often mounting of sensors on the actual gear box for the purpose of simulation is also difficult.

The document GB 2 024 742 A discloses a device for simulating the feel of a gear lever on engagement or disengagement of a gear of a vehicle gear box is for use in a vehicle simulator in which the operation of vehicle controls such as the gear lever causes movement of a simulated view of a road before the trainee driver. The device includes a rod which is connected to the gear lever and which is moved axially by gear engaging and disengaging movements of the gear lever. Axial movement of the rod is resisted by a spring-loaded ball engaging in a depression in a neutral position of the gear lever and in each gear engaged position, the ball retracting from one depression at the commencement of movement of the gear lever and entering the other depression at the end of movement of the gear lever.

### SUMMARY:

The subject matter described herein is directed to gear shifting and in particular is related to the field of simulation of gear shifting in a vehicle. The present subject matter proposes a strategic solution to eliminate the challenges experienced in the simulation of conventional gear shifting operation.

The invention comprises a gear box simulator as defined in the appended claims 1 to 9.

### BRIEF DESCRIPTION OF THE DRAWINGS:

The above and other features, aspects and advantages of the subject matter will become better understood with regard to the following description, appended claims, and accompanying drawings where:
**Fig**.**1** shows the isometric view of the gear shifting mechanism assembly in accordance with an embodiment of the present subject matter.
**Fig.2** shows the isometric exploded view of the gear shifting mechanism assembly in accordance with an embodiment of the present subject matter.

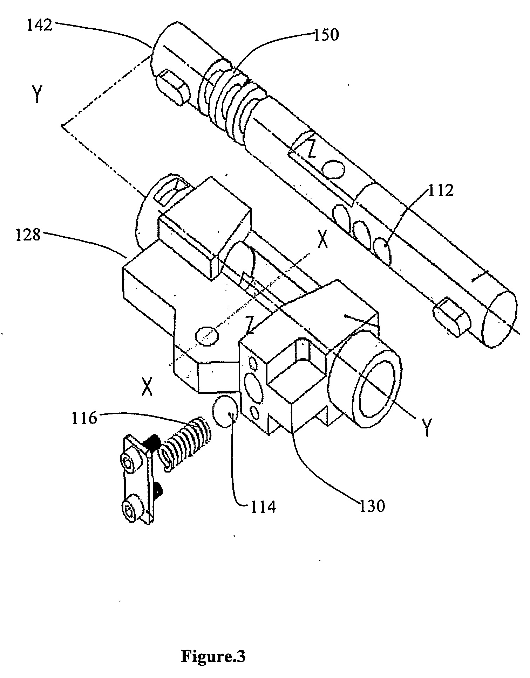

**Fig.3** shows the isometric exploded view rotated about the longitudinal axis in the clockwise direction in accordance with an embodiment of the present subject matter.

### DESCRIPTION:

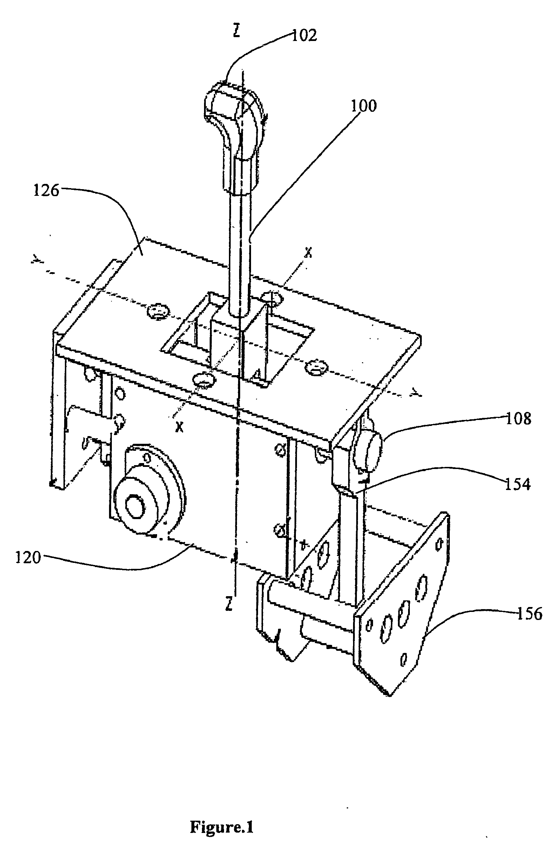

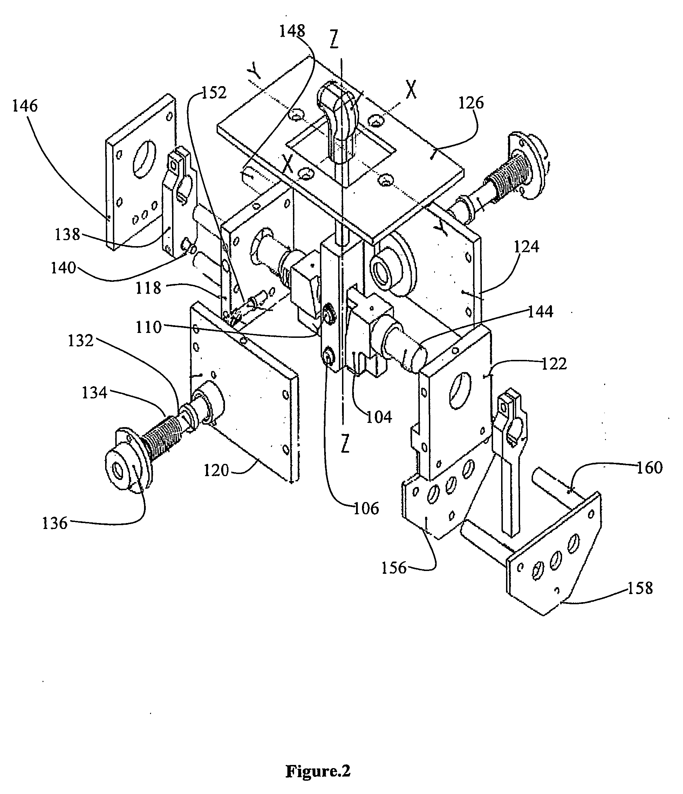

**Fig.1** shows the isometric view of the gear shifting mechanism assembly whereas **Fig.2** shows the isometric exploded view of the gear shifting mechanism assembly in accordance with an embodiment of the present subject matter.**Fig**.**3** shows the isometric exploded view rotated about the transverse axis in the clockwise direction in accordance with an embodiment of the present subject matter. In the present embodiment, the terms "longitudinal axis" and "first axis" are interchangeably used, while the terms "transverse axis" and "second axis" are interchangeably used. A gear shifting lever **100** having a gear knob **102** is connected to a central block **104** with a pivot pin **106** and to a shaft **108** through a slot in the gear shifting lever **100** with a push pin **110.** The pivot pin **106** facilitates rotational freedom of the gear shifting lever **100** about the transverse axis thereby providing a forward and backward movement to the gear shifting lever **100.** When the gear shift lever **100** rotates about the axis of the pivot pin **106,** the shaft **108** which is guided inside the central block **104,** moves along the longitudinal axis facilitated by the push pin **110.**

The shaft **108** has a first set **112** and a second set of grooves **150.** A ball **114,** loaded with a first spring **116** is placed onto any one groove of the first set of grooves **112** through the central block **104.**

The rotational freedom of the gear shift lever **100** is restricted by means of an angular slot provided on the central block **104.** The angle in the angular slot can be decided based on the required rotational freedom of the gear shift lever **100.** When the shaft **108** is moved along the longitudinal axis by the gear shift lever **100,** the ball **114** gets placed in any one groove of the first set of grooves**112**. This whole arrangement gives a feel of forward or backward gear engagement.

The assembly of the gear shifting lever **100,** the central block **104** and the shaft **108** is housed in an enclosure containing a first housing plate **118,** a second housing plate **120,** and a third housing plate **122,** a fourth housing plate **124** and a fifth housing plate **126.** The first housing plate **118** and the third housing plate **122** are located at a first end **128** and a second end **130** respectively of the central block **104.** This setup facilitates the rotational freedom of the gear shifting lever **100** about the longitudinal axis of the shaft **108.**

A second means comprising of a pin **132,** an outer cap **136** and a second spring **134** hold the assembly of gear shifting lever **100,** central block **104** and shaft **108** at neutral position, where the neutral position of the assembly is defined as the position of the gear shift lever **100** when it is perpendicular to the transverse and longitudinal axes. The second means are inserted through the housing plate **120** and the housing plate **124.**

A locking lever **138** with a locking pin **140** is connected to a first end portion **142** of the shaft **108.** A locking plate **146** is fitted to the first housing plate **118** by means of a first pillar set **148,** such that the locking plate **146** is substantially parallel to the first housing plate **118.** When the gear shifting lever **100** rotates about the axis of the pivot pin **106,** then the shaft **108** along with the locking lever **138** moves along the longitudinal axis till the ball **114** sits in any one groove of the first set of grooves **110** provided on the shaft **108.** The first housing plate **118** and the locking plate **146** are provided with a set of first and second openings respectively. Based on the forward or backward movement of the gear shifting lever **100,** the locking pin **140** selectively gets inserted into any one opening of the first or the second set of openings. The opening on the locking plate **146** or the first housing plate **118** through which the locking pin **140** gets inserted, depends on the orientation of the gear shift lever **100.** The shaft **108** has a second set of grooves **150** that are cylindrically shaped. A spring-loaded pin **152** is placed onto the second set of grooves **150** on the shaft 108 through the central block **104.** The spring-loaded pin **152** is connected to the clutch pedal of the vehicle. When the clutch pedal is pressed the spring-loaded pin **152** is pulled out of second set of grooves **150.** This arrangement does not allow the change of gears unless the clutch pedal is pressed.

A sensing lever **154** is connected to a second end portion **144** of the shaft **108.** A first sensing plate **156** is fixed to the gear box housing and the second sensing plate **158** is connected to the first sensing plate **156** by means of a second pillar set **160.** The first sensing plate **156** and the second sensing plate **158** are provided with mounting holes, in which sensors or switches are mounted. These sensors detect the gear engaged.

Other advantages of the inventive gear shifting mechanism will become better understood from the description and claims of an exemplary embodiment of such a unit.

The inventive gear shifting mechanism of the present subject matter is not restricted to the embodiments that are mentioned above in the description.

Although the subject matter has been described with reference to specific embodiments, this description is not meant to be construed in a limiting sense. Various modifications of the disclosed embodiments, as well as alternate embodiments of the subject matter, will become apparent to persons skilled in the art upon reference to the description of the subject matter. It is therefore contemplated that such modifications can be made without departing from the spirit or scope of the present subject matter as defined.

## Claims

1. A gear box simulator for a vehicle, said gear box simulator comprising:
a gear shift lever **(100);**
a central block **(104)** having a first end **(128)** and a second end **(130),**
wherein said central block **(104)** is provided with an angular slot that restricts the rotational freedom of said gear shift lever **(100),**
said gear shift lever **(100)** is pivotally connected to said central block **(104),** wherein said gear shift lever **(100)** is adapted to move relative to said central block **(104)** in a first axis;
a shaft **(108)** having a first end **(142)** and a second end **(144),** wherein said shaft **(108)** is provided with a first set **(112)** and a second set of grooves **(150),**
said shaft **(108)** is longitudinally disposed inside said central block **(104)** wherein said shaft **(108)** is so connected to said gear shift lever **(100)** that any forward or backward movement in said first axis of said gear shift lever **(100)** causes a corresponding movement of said shaft **(108)** relative to said central block **(104);**
a first means (114, 116), wherein said first means (114, 116) selectively locks said shaft (108) in any one groove of said first set of grooves (112);
a second means **(132, 134, 136),** wherein said second means **(132, 134, 136)** holds said gear shift lever **(100),** said shaft **(108)** and said central block **(104)** at a neutral position; and
a housing block;
wherein said central block **(104)** is adapted to move along with said shaft **(108)** and said gear shift lever **(100)** in a second axis.

2. The gear box simulator as claimed in claim 1, wherein a locking means is operably connected to a clutch pedal of said vehicle, said locking means restricts changing of gear by engaging in any one groove of said second set of grooves **(150),** said locking means gets disengaged on pressing said clutch pedal.

3. The gear box simulator as claimed in claim 1, wherein said first means **(114, 116)** provides variable resistance when shifting said gear shift lever **(100)** out of and between said first set of grooves **(112).**

4. The gear box simulator as claimed in claim 1, wherein said housing block retains said second means **(132, 134, 136),** thereby resiliency holding said central block **(104)** at the neutral position.

5. The gear box simulator as claimed in claim 1, wherein said first means comprises a ball **(114),** a first spring **(116)** and a spring backing plate.

6. The gear box simulator as claimed in claim 1, wherein said second means comprises a pin **(132),** an outer cap **(136)** and a second spring **(134).**

7. The gear box simulator as claimed in claim 1, wherein a first housing plate **(118)** is disposed at said first end **(128)** of said central block **(104),** and a locking plate **(146)** is Fitted to said first housing plate **(118)** by means of a first pillar set **(148)** such that said housing plate **(118)** and said locking plate **(146)** are substantially parallel to each other, and wherein said first housing plate **(118)** and said locking plate **(146)** are provided with a set of first and second openings respectively.

8. The gear box simulator as claimed in claim 7, wherein a locking lever **(138)** with a locking pin **(140),** is mounted on said first end portion **(142)** of said shaft **(108)** such that any forward or backward movement of said gear shift lever **(100)** in the first axis, selectively engages said locking pin **(140)** onto any one opening of said first or second set of openings.

9. The gear box simulator as claimed in claim 1, wherein a sensing lever **(154)** is operably connected to said second end portion **(144)** of said shaft **(108).**

## Patentansprüche

1. Getriebesimulator für ein Fahrzeug, wobei der genannte Getriebesimulator Folgendes umfasst:
einen Gangschalthebel **(100);**
einen zentralen Block **(104)** mit einem ersten Ende **(128)** und
einem zweiten Ende **(130),**
wobei der genannte zentrale Block **(104)** mit einem winkelförmigen Schlitz versehen ist, welcher die Rotationsfreiheit des genannten Gangschalthebels **(100)** einschränkt,
der genannte Gangschalthebel **(100)** ist drehbar mit dem genannten zentralen Block **(104)** verbunden, wobei der genannte Gangschalthebel **(100)** dazu ausgelegt ist, sich relativ zu dem genannten zentralen Block **(104)** entlang einer ersten Achse zu bewegen;
eine Welle **(108)** mit einem ersten Ende **(142)** und einem zweiten Ende **(144),** wobei die genannte Welle **(108)** mit einem ersten Satz **(112)** und einem zweiten Satz Nuten **(150)** versehen ist,
die genannte Welle **(108)** ist längs innerhalb des genannten zentralen Blocks **(104)** angeordnet, wobei die genannte Welle **(108)** so mit dem genannten Gangschalthebel **(100)** verbunden ist, dass jede vorwärts- oder rückwärtsgerichtete Bewegung des genannten Gangschalthebels **(100)** entlang der genannten ersten Achse eine entsprechende Bewegung der genannten Welle **(108)** relativ zu dem genannten zentralen Block **(104)** bewirkt;
ein erstes Mittel **(114, 116),** wobei das genannte erste Mittel **(114, 116)** die genannte Welle **(108)** selektiv in einer beliebigen Nut des genannten ersten Satzes Nuten **(112)** arretiert;
ein zweites Mittel **(132, 134, 136),** wobei das genannte zweite Mittel **(132, 134, 136)** den genannten Gangschalthebel **(100),**
die genannte Welle **(108)** und den genannten zentralen Block **(104)** in einer neutralen Stellung hält; und
einen Gehäuseblock;
wobei der genannte zentrale Block **(104)** dazu ausgelegt ist, sich zusammen mit der genannten Welle **(108)** und dem genannten Gangschalthebel **(100)** entlang einer zweiten Achse zu bewegen.

2. Getriebesimulator nach Anspruch 1, wobei ein Arretiermittel wirkend mit einem Kupplungspedal des genannten Fahrzeugs verbunden ist, wobei das genannte Arretiermittel den Gangwechsel einschränkt, indem es in eine beliebige Nut des genannten zweiten Satzes Nuten **(150)** eingreift, wobei das genannte Arretiermittel bei Drücken des genannten Kupplungspedals gelöst wird.

3. Getriebesimulator nach Anspruch 1, wobei das genannte erste Mittel **(114, 116)** variablen Widerstand leistet, wenn der genannte Gangschalthebel **(100)** aus und zwischen dem genannten ersten Satz Nuten **(112)** bewegt wird.

4. Getriebesimulator nach Anspruch 1, wobei der genannte Gehäuseblock das genannte zweite Mittel **(132, 134, 136)** hält, wodurch der genannte zentrale Block **(104)** elastisch in der neutralen Stellung gehalten wird.

5. Getriebesimulator nach Anspruch 1, wobei das genannte erste Mittel eine Kugel **(114),** eine erste Feder **(116)** und eine Feder-Stützplatte umfasst.

6. Getriebesimulator nach Anspruch 1, wobei das genannte zweite Mittel einen Stift **(132),** eine äußere Kappe **(136)** und eine zweite Feder **(134)** umfasst.

7. Getriebesimulator nach Anspruch 1, wobei eine erste Gehäuseplatte **(118)** an dem genannten ersten Ende **(128)** des genannten zentralen Blocks **(104)** angeordnet ist und eine Arretierplatte **(146)** an der genannten ersten Gehäuseplatte **(118)** mittels eines ersten Satzes Träger **(148)** so befestigt ist, dass die genannte Gehäuseplatte **(118)** und die genannte Arretierplatte **(146)** im Wesentlichen parallel zueinander sind, und wobei die genannte erste Gehäuseplatte **(118)** und die genannte Arretierplatte **(146)** mit einem Satz erster bzw. zweiter Öffnungen versehen sind.

8. Getriebesimulator nach Anspruch 7, wobei ein Arretierhebel **(138)** mit einem Arretierstift **(140)** an dem genannten ersten Endabschnitt **(142)** der genannten Welle **(108)** so angebracht ist, dass jede vorwärts- oder rückwärtsgerichtete Bewegung des genannten Gangschalthebels **(100)** entlang der ersten Achse den genannten Arretierstift **(140)** selektiv in eine beliebige Öffnung des genannten ersten oder zweiten Satzes Öffnungen eingreifen lässt.

9. Getriebesimulator nach Anspruch 1, wobei ein Tasthebel **(154)** wirkend mit dem genannten zweiten Endabschnitt **(144)** der genannten Welle **(108)** verbunden ist.

## Revendications

1. Simulateur de boîte de vitesses pour véhicule, ledit simulateur de boîte de vitesses comprenant :
un levier de changement de vitesse (100) ;
un bloc central (104) ayant une première extrémité (128) et une seconde extrémité (130), ledit bloc central (104) étant muni d'une fente angulaire qui restreint la liberté en rotation dudit lever de changement de vitesse (100),
ledit levier de changement de vitesse (100) étant relié de manière pivotante audit bloc central (104), ledit levier de changement de vitesse (100) étant adapté pour se déplacer par rapport audit bloc central (104) suivant un premier axe ;
un arbre (108) ayant une première extrémité (142) et une seconde extrémité (144), ledit arbre (108) étant muni d'un premier ensemble (112) et d'un second ensemble de creux (150),
ledit arbre (108) étant disposé longitudinalement à l'intérieur dudit bloc central (104), ledit arbre (108) étant relié audit levier de changement de vitesse (100) de telle manière que tout mouvement vers l'avant ou vers l'arrière suivant ledit premier axe dudit levier de changement de vitesse (100) entraîne un mouvement correspondant dudit arbre (108) par rapport audit bloc central (104) ;
un premier moyen (114, 116), ledit premier moyen (114, 116) verrouillant sélectivement ledit arbre (108) dans n'importe quel creux dudit premier ensemble de creux (112) ;
un second moyen (132, 134, 136), ledit second moyen (132, 134, 136) maintenant ledit levier de changement de vitesse (100), ledit arbre (108) et
ledit bloc central (104) dans une position neutre ; et
un bloc de logement ;
ledit bloc central (104) étant adapté pour se déplacer avec ledit arbre (108) et ledit levier de changement de vitesse (100) suivant un second axe.

2. Simulateur de boîte de vitesses selon la revendication 1, dans lequel un moyen de verrouillage est relié fonctionnellement à une pédale d'embrayage dudit véhicule, ledit moyen de verrouillage restreint le changement de vitesse en s'engageant dans n'importe quel creux dudit second ensemble de creux (150), ledit moyen de verrouillage est désengagé en appuyant sur ladite pédale d'embrayage.

3. Simulateur de boîte de vitesses selon la revendication 1, dans lequel ledit premier moyen (114, 116) fournit une résistance variable lorsque ledit levier de changement de vitesse (100) est déplacé hors de et entre ledit premier ensemble de creux (112).

4. Simulateur de boîte de vitesses selon la revendication 1, dans lequel ledit bloc de logement retient ledit second moyen (132, 134, 136), maintenant ainsi élastiquement ledit bloc central (104) dans la position neutre.

5. Simulateur de boîte de vitesses selon la revendication 1, dans lequel ledit premier moyen comprend une bille (114), un premier ressort (116) et une plaque d'appui de ressort.

6. Simulateur de boîte de vitesses selon la revendication 1, dans lequel ledit second moyen comprend une goupille (132), un capuchon extérieur (136) et un second ressort (134).

7. Simulateur de boîte de vitesses selon la revendication 1, dans lequel une première plaque de logement (118) est disposée à ladite première extrémité (128) dudit bloc central (104), et une plaque de verrouillage (146) est assemblée à ladite première plaque de logement (118) au moyen d'un premier ensemble de piliers (148) de telle sorte que ladite plaque de logement (118) et ladite plaque de verrouillage (146) soient sensiblement parallèles l'une à l'autre, et dans lequel ladite première plaque de logement (118) et ladite plaque de verrouillage (146) sont munies d'un ensemble de premières et secondes ouvertures respectivement.

8. Simulateur de boîte de vitesses selon la revendication 7, dans lequel un levier de verrouillage (138) avec une goupille de verrouillage (140) est monté sur ladite première partie d'extrémité (142) dudit arbre (108) de telle sorte que tout mouvement vers l'avant ou vers l'arrière dudit levier de changement de vitesse (100) suivant le premier axe fasse entrer sélectivement ladite goupille de verrouillage (140) dans une ouverture quelconque dudit premier ou second ensemble d'ouvertures.

9. Simulateur de boîte de vitesses selon la revendication 1, dans lequel un levier de détection (154) est relié fonctionnellement à ladite seconde partie d'extrémité (144) dudit arbre (108).
